# NEUE EUROPÄISCHE PATENTSCHRIFT

(11) **EP 3 129 888 B2**
(45) Veröffentlichungstag und Bekanntmachung des Hinweises auf die Entscheidung über den Einspruch: **22.02.2023**
(45) Hinweis auf die Patenterteilung: 28.03.2018
(21) Anmeldenummer: 15720606.1
(22) Anmeldetag: 09.04.2015
(51) Int. Cl.: G06F 12/14, G06F 21/78

(54) **ÜBERMITTLUNG VON DATEN AUS EINEM GESICHERTEN SPEICHER**
TRANSMISSION OF DATA OUT OF A SECURED STORAGE
TRANSMISSION DE DONNÉES D'UN MÉMOIRE SECURISÉ

(30) Priorität: 11.04.2014 AT 502752014
(43) Veröffentlichungstag der Anmeldung: 15.02.2017
(73) Patentinhaber: AVL List GmbH, 8020 Graz (AT)
(72) Erfinder: ALDRIAN, Andreas, 8144 Haselsdorf-Tobelbad (AT)
(86) Internationale Anmeldenummer: PCT/EP2015/057683
(87) Internationale Veröffentlichungsnummer: WO 2015/155274

(56) Entgegenhaltungen:
- EP-A1- 1 276 271
- WO-A1-2006/066604
- WO-A1-2007/080136
- WO-A2-00/36807
- DE-T2- 60 021 183
- US-A1- 2007 118 745

## Beschreibung

Die Erfindung betrifft eine Vorrichtung zur Übermittlung von Daten zwischen zumindest einer Daten generierenden Einheit und einer fernen Kommunikationseinheit, wobei die Vorrichtung zumindest eine Schnittstelle für ein webfähiges Kommunikationsprotokoll zur gesicherten Kommunikation mit der fernen Kommunikationseinheit über ein nicht proprietäres und vorzugsweise öffentlich zugängliches Netzwerk und zumindest eine Schnittstelle für ein hardwarenahes Kommunikationsprotokoll zur Kommunikation mit der Daten generierenden Einheit aufweist. Weiters betrifft die Erfindung ein Verfahren zur Übermittlung von Daten zwischen einer solchen Vorrichtung und einer fernen Kommunikationseinheit.

Die technische Entwicklung in der Kommunikationstechnologie ermöglicht zunehmend Dienstleistungen, die noch vor kurzen unmöglich waren, da mittlerweile immer mehr technische Gegenstände in der Lage sind, Daten über das Internet zu übermitteln und zum Beispiel Steuerbefehle von der Ferne über das Internet zu erhalten. Beispiele dafür sind die Fernsteuerung einer Heizungsanlage vom Smartphone aus, oder im industriellen Bereich die Überwachung und Fernwartung von Produkten.

Ein wichtiger Bereich dieser neuen Strategien wird als "Smart Services" bezeichnet, wobei darunter Dienstleistungen zu verstehen sind, die von einem Hersteller oder Dienstleistungsanbieter über das Internet an Geräten und Einrichtungen eines Kunden vorgenommen werden. Ein Problem besteht jedoch darin, dass die Voraussetzungen für solche Dienstleistungen oftmals noch geschaffen werden müssen, da die erforderliche serviceorientierte Architektur (SOA) noch nicht vorhanden ist.

Eine Voraussetzung für die Implementierung einer serviceorientierten Architektur liegt darin, dass alle eingebundenen Geräte auf irgendeine Weise zu einer Web-fähigen Kommunikation fähig sein müssen. Als "Web-fähig" werden im Zusammenhang mit der gegenständlichen Anmeldung Protokolle angesehen, die es erlauben, eine sicherbare, vorzugsweise AAA-Konforme und verschlüsselungsfähige Kommunikationsverbindung über offene, also Dritten zugängliche, Netzwerke, insbesondere das Internet aufzubauen und Datenverkehr darüber abzuwickeln. Der Protokollstapel eines Web-fähigen Protokolls bildet dabei alle 7 Schichten des OSI-Referenzmodells ab.

Die Kommunikationsverbindung wird dabei im Allgemeinen über einen Webdienst hergestellt. Kennzeichnend für einen Webdienst ist insbesondere die Art des Verbindungsaufbaus. Dabei wird die Kommunikation von der fernen Kommunikationseinheit aufgebaut, die Daten aus dem Endgerät abrufen will. Dazu ist es erforderlich, das in der Sicherheitsarchitektur am Endgerätestandort Ports für die eingehende Kommunikation offenstehen, über die von der fernen Kommunikationseinheit eine Tunnelung zu dem Endgerät hergestellt werden kann. Diese offenen Ports und die Möglichkeit, einen Datenabruf von der Ferne aus einzuleiten, stellen ein potentielles Sicherheitsrisiko dar und sie werden daher für Hackerangriffe ausgenutzt.

Um solche Verbindung sicherer zu gestalten, werden Zertifikate verwendet, die am Endgerät gespeichert sind, und über die die Identität des abrufenden Geräts sichergestellt und eine verschlüsselte Verbindung aufgebaut werden kann. Um jedoch die sichere Kommunikation aufzubauen, muss zuerst eine Verbindung zwischen der fernen Kommunikationseinheit und dem Endgerät hergestellt werden, was wiederum Angriffsmöglichkeiten bietet.

Hochkomplexe industrielle Anlagen, zum Beispiel zur Produktion oder zur Durchführung von Tests, umfassen im Allgemeinen Geräte zahlreiche Hersteller, wobei mehrere Spezialisten für die Wartung der einzelnen Komponenten zuständig sind. Für den Hersteller solcher Komponenten ist es von größtem Interesse, Informationen über die Nutzung seines Produkts vom Kunden zu erhalten, einerseits um Daten für die Weiterentwicklung zu erhalten, andererseits um angepasste Wartungs- und Servicestrategien anbieten zu können, die auch für den Kunden von Vorteil sind.

In Industriellen Umgebungen bestehen vor allem drei große Problemgruppen, die die Umsetzung verzögern:

Erstens sind, im Gegensatz zu Consumer-Produkten, wie etwa Smartphones, viele Komponenten industrieller Systeme sehr spezifisch für ihre jeweilige Anwendung bestimmt und verfügen oft nur über sehr eingeschränkte Kommunikationsmöglichkeiten, von einer einfachen kabelgebundenen Analog-Signalausgabe, über Feldbusse, wie etwa CAN oder Profibus, bis hin zu einfachen Netzwerksystemen, wie etwa Ethernet. Hinsichtlich des OSI-Schichtmodells sind solche hardwarenahen Kommunikationsprotolle meist in den Schichten 1, 2 und 3 einzuordnen. Solche Verbindungslösungen sind nur für lokale Netzwerke geeignet und es mangelt ihnen an Sicherheitssystemen. Eine Anbindung an das Internet wäre bei solchen Systemen nur über Gateways möglich, aber dadurch würde das System einer erheblichen Gefahr von Angriffen ausgesetzt, insbesondere wenn Dritten, also beispielsweise einem Serviceanbieter, ein Zugriff auf Daten des Systems eingeräumt werden soll. Daher werden solche Systeme nur isoliert verwendet und diese isolierte Architektur schließt die Einbindung in eine serviceorientierte Architektur aus.

Zweitens handelt es sich meist um gewachsene Systeme, bei denen Bauelemente mehrerer Generationen gemeinsam verwendet werden. Aufgrund der langen Lebensdauer industrieller Komponenten können diese oft über Jahrzehnte im Einsatz sein. Alle Komponenten einer Anlage gleichzeitig gegen "internetfähige" Geräte auszutauschen, kommt jedoch aus Kostengründen meist nicht in Frage und würde weitere Sicherheitsprobleme aufwerfen.
Drittens handelt es sich bei den Systemdaten oft um hochsensible Daten, die vor den Konkurrenten geheim gehalten werden sollen, und die oft auch nicht an die Hersteller der Systeme oder an Serviceanbieter herausgegeben werden sollen. Es ist für Firmen von großer Wichtigkeit, dass sie über die Nutzung ihrer Daten jederzeit bestimmen können. Aus naheliegenden Gründen der Datensicherheit kommen daher Kommunikationssysteme, die für Konsumenten geschaffen wurden, für industrielle Zwecke meist nicht in Frage.

Als Beispiel bereits bestehender Technologie sei auf die Lehre der Druckschrift EP1276271-A1 hingewiesen, in der Vorrichtungen, die mit Sicherheitskontrollern und partitioniertem Sicherheitsspeichern ausgestattet sind, zum Versenden von Daten über ein Kommunikationsnetz vorgestellt werden. Die gegenständliche Erfindung zielt darauf ab, die Nachteile des Standes der Technik zu überwinden. Insbesondere soll es möglich sein, auch Geräte in eine serviceorientierte Architektur einzubinden, die nur über hardwarenahe Kommunikationsprotokolle kommunizieren können. Dennoch muss ein Zugriff auf diese Geräte durch Unbefugte ausgeschlossen werden können. Erfindungsgemäß sollen dabei auch bestehende, alte Geräte die noch in Verwendung sind, in die serviceorientierte Architektur eingebunden werden können. Als weitere Sicherheitsanforderung soll es erfindungsgemäß einfach und nachvollziehbar möglich sein, die Datenzugriffsberechtigungen für alle Beteiligten genau festzulegen.

Als "hardwarenahe Kommunikationsprotokolle" werden im Zusammenhang mit der gegenständlichen Beschreibung allgemein Kommunikationsprotokolle bezeichnet, deren Schichtaufbau bzw. Protokollstapel nicht alle 7 Schichten des OSI-Modells umfasst, insbesondere Protokolle, die keine Darstellungsschicht (Schicht 6) aufweisen, und daher weder eine systemübergreifende Kommunikation, noch eine Datenverschlüsselung erlauben. Ein Merkmal hardwarenaher Kommunikationsprotokolle ist es, dass sie keine Implementierung von Sicherheitsprotokollen ermöglichen, die eine zuverlässige, gesicherte Kommunikation über verteilte (Cloud-)Netzwerke erlauben würde.

Bestehende Kommunikationsschnittstellen für hardwarenahe Protokolle, die beispielsweise eine Feldbus-Technologie oder eine Punkt-zu-Punkt-Ethernetverbindung nutzen können, sind daher auf das bloße Minium der 7 Schichten des OSI-Modells beschränkt. Besonders einfache hardwarenahe Kommunikationsprotokolle nutzen lediglich die Bitübertragungsschicht (Schicht 1) oder eine Kombination von Bitübertragungs- und Sicherungsschicht (Schicht 2).

Zu Beispielen für Protokolle der Bitübertragungsschicht zählen V.24, V.28, X.21, RS 232, RS 422, RS 423 oder RS 499. Zu Beispielen, die Kombinationen aus Schicht 1 und 2, oder nur Schicht 2, nutzen, zählen das Ethernet-Protokoll, HDLC, SDLC, DDCMP, IEEE 802.2 (LLC), ARP, RARP, STP, IEEE 802.11 (WLAN), IEEE 802.4 (Token Bus), IEEE 802.5 (Token Ring) oder FDDI.

Zusätzlich können in hardwarenahen Kommunikationsprotokollen auch Protokolle höherer Schichten Verwendung finden. Zu Beispielen von Protokollen der Schichten 3 bis 5 zählen X.25, ISO 8208, ISO 8473 (CLNP), ISO 9542 (ESIS), IP, IPsec, ICMP, ISO 8073/X.224, ISO 8602, TCP, UDP, SCTP, ISO 8326 / X.215 (Session Service), ISO 8327 / X.225 (Connection-Oriented Session Protocol) oder ISO 9548 (Connectionless Session Protocol).

Zu Beispielen von hardwarenahen Kommunikationsprotokollen, die insbesondere für industrielle Anwendungen im Bereich von Testumgebungen, zum Beispiel im Automobilbereich, genutzt werden, zählen unter anderem das AK-Protokoll über RS232, CANopen über CAN und Profibus-DP über RS485. Besonders das AK-Protokoll des "Verbands der Automobilindustrie e.V. / Arbeitskreis Techniken zur Standardisierung der Abgasmessung" ist immer noch ein de facto Standard bei vielen Testanlagen im Automobilbereich. Es wurde als einfaches Protokoll für die hardwarenahe Datenübertragung geschaffen und bietet keine Möglichkeiten, ein Triple-A-System (Authentication, Autorization, Accounting - AAA) umzusetzen.

Erfindungsgemäß werden die oben definierten Ziele durch eine Vorrichtung der eingangs genannten Art erreicht, die einen Sicherheitskontroller aufweist, der zur Steuerung der Kommunikation über die Web-fähige(n) Schnittstelle(n) und über die hardwarenahe(n) Schnittstelle(n) fähig ist, wobei dem Sicherheitscontroller ein sicherer Speicher zugeordnet ist, der definierte Speicherbereiche aufweist, wobei zumindest einem Speicherbereich zumindest ein Zertifikat zugeordnet ist. Eine solche Vorrichtung kann über die hardwarenahen Schnittstellen mit den Daten generierenden Einheiten, also insbesondere mit einzelnen Komponenten der Anlage, die in die serviceorientierte Architektur eingebunden werden sollen, über deren hardwarenahe Kommunikationsprotokolle kommunizieren und entsprechende Daten generieren, die in einem bestimmten Speicherbereich abgelegt werden. Um die Daten abzurufen, kann von der fernen Kommunikationseinheit eine Fernabfrage über die Web-fähige Schnittstelle durchgeführt werden, wobei die Berechtigung zur Abfrage über das Zertifikat geprüft werden kann. Für jeden Speicherbereich können die jeweilig zugriffsberechtigten Zertifikate (bzw. die "Zertifikatsbegünstigten", die über dieses Zertifikat verfügen) einzeln festgelegt werden. Der Sicherheitscontroller stellt sicher, dass die Kommunikationsverbindung (der sog. "Tunnel") im Sicherheitscontroller endet, und es keiner fernen Kommunikationseinheit möglich ist, eine direkte Verbindung zu dem Endgerät (d.h. der Daten generierenden Einheit) herzustellen. Daher sind auch entsprechende Zertifikate im sicheren Speicher des Sicherheitscontrollers abgelegt, und nicht in einem Speicher der der Daten generierenden Einheit.

Ein Zertifikat bezeichnet allgemein ein Objekt, über das das Vertrauen und die Zuordenbarkeit/Nichtabstreitbarkeit einer Person oder Instanz sichergestellt werden kann. Dies betrifft insbesondere die Schritte der Authentifizierung und Autorisierung der sogenannten AAA-Konformität. Zertifikate können insbesondere zur Transport- und Zugriffsabsicherung verwendet werden. Dabei wird der öffentliche Teil des Zertifikats ("Öffentlicher Schlüssel" bzw. "Public Key") zur Absicherung verwendet, sodass nur der Inhaber des entsprechenden privaten Teil des Zertifikats ("Privater Schlüssel" bzw. "Private Key") die Möglichkeit hat, Zugriff auf oder Einsicht in die Daten zu haben. Der derzeit am weitesten verbreitete Standard für Zertifikate ist X.509, auch als "PKI-Store" bekannt, dem Fachmann sind jedoch auch weitere verwendbare Verfahren bekannt.

Erfindungsgemäß ist in zumindest einem Speicherbereich Programmcode enthalten, der auf dem Sicherheitskontroller lauffähig ist. Dadurch können sicherheitsrelevante Programmteile, die zum Beispiel die Arbeitsweise des Sicherheitskontrollers definieren, selbst im sicheren Speicher gegen Manipulationen geschützt werden und sie stehen ebenfalls einer Zugriffskontrolle über Zertifikate zur Verfügung.

In vorteilhafter Weise kann der Speicherbereich, der den Programmcode enthält, dem Zertifikat eines Hardwareanbieters des Sicherheitscontrollers zugeordnet sein. Grundlegende Programmteile können somit nur vom Hardwareanbieter des Sicherheitschips selbst geändert werden, sodass eine irrtümliche Deaktivierung von Sicherheitsmerkmalen durch Mitarbeiter oder eine mutwillige Beeinträchtigung durch Angreifer ausgeschlossen ist.

Eine vorteilhafte Ausführungsform der Erfindung kann vorsehen, dass zumindest ein Speicherbereich einer bestimmten Daten generierenden Einheit zugeordnet ist, wobei der Speicherbereich eine eindeutige Identifikation (Unique ID), Betriebsdaten, Steuerdaten, Konfigurationsdaten und/oder historische Daten der Einheit enthält. Dadurch ist es zum Beispiel für den Serviceanbieter möglich, auf relevante Daten mittels Fernzugriff zugreifen und diese je nach Berechtigung auch zu verändern (z.B. um sie nach einem Service zurückzusetzen). Indem mehrere Speicherbereiche einer einzigen Einheit zugeordnet werden, können durch Zuordnung unterschiedlicher Zertifikate auch komplexe Berechtigungsstrukturen umgesetzt werden. Da die Kommunikationsverbindung im Sicherheitscontroller endet, ist eine Kommunikation mit der Daten generierenden Einheit und eine Manipulation der Daten generierenden Einheit durch die ferne Kommunikationseinheit ausgeschlossen.

Eine weitere vorteilhafte Ausführungsform der Erfindung kann vorsehen, dass zumindest ein Speicherbereich Zertifikate und/oder Zuordnungen enthält. Somit lassen sich auch die Zertifikate selbst mit dem selben System gegen fremden Zugriff schützen. Weiters lässt sich festlegen, wer berechtigt ist, die Zuordnungen, und somit die Zugriffsberechtigungen, zu verändern. Besonders vorteilhaft kann es dabei sein, wenn der Speicherbereich, der die Zertifikate und/oder die Zuordnungen enthält, dem Zertifikat eines Inhabers der Vorrichtung zugeordnet ist. Dies ist oft sinnvoll, da dadurch der Inhaber selbst definieren kann, welche Rechte er Dritten, und insbesondere dem Serviceanbieter, einräumt. Eine besonders hohe Sicherheitsstufe lässt sich erzielen, wenn die Zugriffsberechtigung im Programmcode des Sicherheitscontrollers definiert ist.

In vorteilhafter Weise kann der Sicherheitscontroller Mittel zur Überwachung der an die hardwarenahen Schnittstellen angeschlossenen Daten generierenden Einheiten aufweisen. Dadurch lässt sich erkennen, falls ein Gerät zum Beispiel unberechtigt ausgewechselt wurde und ob die Daten des Geräts plausibel sind, zum Beispiel ob ein Betriebsstundenzähler streng monoton ansteigt.

In einer bevorzugten Ausführungsform kann der Sicherheitscontroller in einem Hardwarechip integriert sein. Dies verhindert Manipulationen der vom Sicherheitscontroller ausgeführten Programme.

Um den Sicherheitscontroller zusätzlich gegen Angriffe zu schützen, kann der Hardwarechip in vorteilhafter Weise einen sicheren Speicher und eine integrierte CPU umfassen.

In einer vorteilhaften Ausführungsform kann der Hardwarechip ein Kryptomodul enthalten. Das Kryptomodul steuert die Verschlüsselung der Kommunikation. Indem das Kryptomodul in den Hardwarechip integriert ist, lassen sich Angriffe, die auf eine Störung der Verschlüsselungsverfahren abzielen, verhindern.

Durch die Kombination von sicherem Speicher, integrierter CPU und Kryptomodul in einem Sicherheitscontroller, der in einem Hardwarechip integriert ist, ist der Sicherheitscontroller in der Lage, nicht nur den sicheren Speicher zu verwalten, sondern auch die Rechenoperationen selbst sicher auszuführen. Dies hat den Vorteil, dass der Sicherheitscontroller "autark" funktioniert, und nicht von einer angreifbaren CPU abhängig ist. Dabei kann der Sicherheitscontroller hardwarecodierte Programmteile umfassen, die über datenbasierte Angriffe nicht manipulierbar sind.

Als sicherer Speicher wird im Zusammenhang mit der gegenständlichen Beschreibung ein Speicher bezeichnet, der gegen einen unberechtigten Zugriff geschützt ist. Insbesondere kann dies ein Speicher sein, auf den ausschließlich der Sicherheitscontroller Zugriff hat, und der daher von Dritter Seite nicht manipulierbar ist.

Mithilfe der Vorrichtung lässt sich in vorteilhafter Weise ein Verfahren zur Übermittlung von Daten zwischen der Vorrichtung und einer fernen Kommunikationseinheit durchführen, das durch die folgenden Schritte gekennzeichnet ist: Herstellen einer Kommunikationsverbindung über eine Web-fähige Schnittstelle mit einer Kommunikationseinheit eines Zertifikatsbegünstigten, dem ein Zertifikat zugeordnet ist; Ermitteln des Zertifikats des Zertifikatsbegünstigten; Ermitteln eines Speicherbereichs der zu übermittelnden Daten; Prüfen der Zuordnung des Zertifikats des Zertifikatsbegünstigten zum Speicherbereich, und bei positiver Prüfung Übermitteln von in dem Speicherbereich gespeicherten Daten an die ferne Kommunikationseinheit und/oder Empfangen von Daten von der fernen Kommunikationseinheit und Speichern der empfangenen Daten in dem Speicherbereich. Mithilfe dieses Verfahrens lassen sich komplexe Sicherheitsarchitekturen praktisch und einfach umsetzen.

In vorteilhafter Weise kann das Verfahren weiters die folgenden Schritte aufweist: Empfangen bzw. Abrufen von (Betriebs-) Daten einer Einheit über eine hardwarenahe Schnittstelle; und Speichern der Betriebsdaten in einem der Einheit zugeordneten Speicherbereich des gesicherten Speichers. Dadurch können (Betriebs-) Daten der Einheiten entweder auf Basis eines Zeitplans, durch ein bestimmtes definiertes Ereignis oder aufgrund einer Benutzerabfrage von der Vorrichtung abgerufen werden. Bei einer nachfolgenden Fernabfrage ist dann kein Zugriff auf die Einheit selbst mehr erforderlich, da die Daten bereits im sicheren Speicher abgelegt sind. Erfindungsgemäß ist es somit nicht erforderlich, dass der durch das Zertifikat ausgewiesene Berechtigte zum Abruf der Daten direkt auf die Einheit selber zugreift. Dadurch werden Manipulationen an der Anlage, in der sich die Einheit befindet, sicher verhindert.

In einer besonders bevorzugten Ausführungsform kann die Kommunikation der Vorrichtung mit der fernen Kommunikationseinheit verschlüsselt erfolgen. Da der jeweilige Kommunikationspartner durch das Zertifikat ausgewiesen ist, kann die Verschlüsselung auf einfache Weise über Schlüsselpaare erfolgen, die den Zertifikaten zugeordnet sind.

In vorteilhafter Weise kann an der Web-fähigen Schnittstelle ein Protokoll implementiert werden, welches rein über Push-Mechanismen funktioniert. Solche Protokolle, zum Beispiel gemäß der MQTT-Spezifikation, erlauben auf Seiten der Web-fähigen Schnittstelle die Umsetzung von Firewall-Richtlinien, die Incomming Traffic sperren. Eine Manipulation des Systems über Webdienste und ein Aufbau einer End-zu-End-Verbindung bis zur Daten generierenden Einheit kann somit ausgeschlossen werden. Bei Protokollen, die rein über Push-Mechanismen funktionieren, wie etwa gemäß dem MQTT-Protokoll, wird bekanntermaßen keine direkte End-zu-End-Verbindung hergestellt, sondern die Kommunikation wird immer über einen zwischengeschalteten Broker vermittelt, der Daten von einem "Publisher" erhält, und sie für einen oder mehrere "Subscriber" bereitstellt, wobei eine zertifikatsgestützte Identifikation von Publisher und/oder Subscriber vorgesehen sein kann. Jeder Endpunkt "öffnet" die Kommunikation zum Broker von sich aus, und diese wird nicht "von außen" eingeleitet.

Da beide Kommunikationspartner sowohl als Subscriber, als auch als Publisher agieren können, ist es auch möglich, Daten in beiden Richtungen auszutauschen, ohne dass dazu ein potentiell angreifbarer Webdienst eingerichtet werden muss.

Vom Sicherheitscontroller aus wird dazu in definierten Abständen eine Verbindung zum Broker hergestellt und es werden entweder Daten für einen Abruf durch berechtigte Dritte bereitgestellt (d.h. die Vorrichtung arbeitet als Publisher) oder es werden Daten von Dritten abgerufen (d.h. die Vorrichtung arbeitet als Subscriber).

Die Erfindung wird im Folgenden unter Bezugnahme auf die beigefügten Zeichnungen detailliert beschrieben, wobei
Fig. 1 eine schematische Darstellung von Netzwerckomponenten zeigt, mit denen eine erfindungsgemäße Vorrichtung kommuniziert;
Fig. 2 eine schematische Darstellung wesentlicher Elemente einer erfindungsgemäßen Vorrichtung zeigt;
Fig. 3 eine weitere schematische Darstellung der erfindungsgemäßen Vorrichtung zeigt, zur Erläuterung beispielhafter Kommunikationsprotokolle; und
Fig. 4 schematisch ein Netzwerk mit einer serviceorientierten Architektur zeigt, in dem die erfindungsgemäße Vorrichtung an mehreren Stellen verwendet wird.

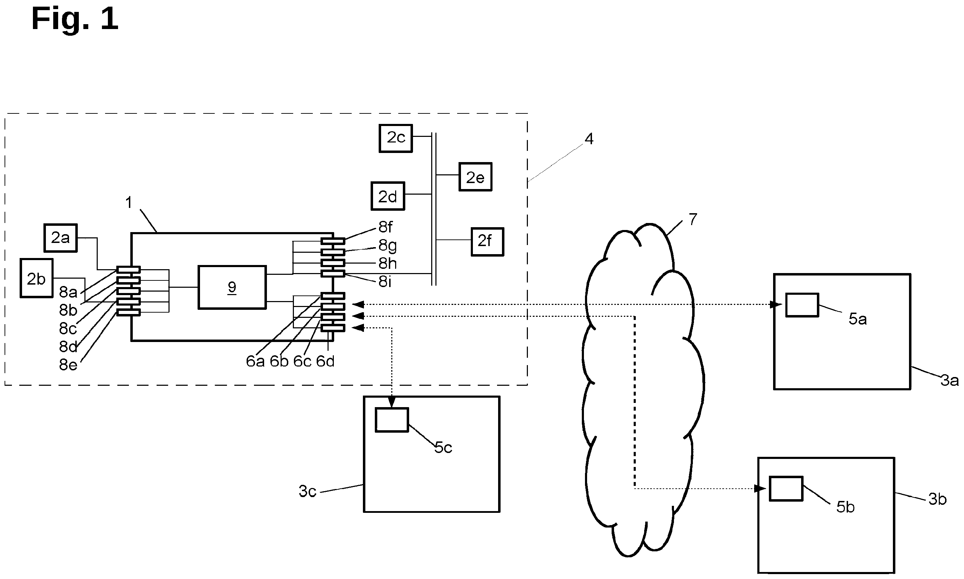

Fig. 1 zeigt eine beispielhafte Netzwerkanordnung, die sich im Wesentlichen in fünf Bereich einteilen lässt, nämlich den Bereich eines Industriestandorts 4, drei Bereiche 3a, 3b, 3c von in weiterer Folge als "Zertifikatsbegünstigte" bezeichneten Kommunikationsteilnehmern, nämlich einem Hardwareanbieter 3a, einem Serviceanbieter 3b und einem Inhaber 3c mit jeweils einer fernen Kommunikationseinheit 5a, 5b, 5c, und den Bereich eines nicht proprietären Netzwerks 7, das eine Cloud-Infrastruktur aufweist, insbesondere das Internet.

Der Industriestandort 4 kann beispielsweise eine Produktionsstätte oder eine Testanlage, z.B. für den Automobilbereich, sein, wobei der Standort einem bestimmten Inhaber 3c zugeordnet ist. Dem Inhaber des Industriestandorts 4 kommt eine besondere Bedeutung zu, da er die Zugriffsberechtigungen festlegen muss, wie in weitere Folge noch erläutert werden wird. Auf dem Industriestandort 4 befinden sich eine Vielzahl an Daten generierenden Einheiten 2a bis 2f, wobei als "Daten generierende Einheit" im Wesentlichen alle Vorrichtungen angesehen werden, deren Status auf irgendeine Weise überwacht werden kann. Im Speziellen kann es sich insbesondere um Einheiten handeln, die von einem bestimmten Anbieter stammen, der Interesse daran hat, die von ihm verkauften Produkte zu überwachen, um eine etwaige Servicedienstleistungen schnell, vorausplanend und einfach bereitstellen zu können. Dem Serviceanbieter ist in Fig. 1 ein eigener Bereich 3b zugeordnet.

Am Industriestandort 4 ist eine erfindungsgemäße Vorrichtung 1 vorgesehen, wobei die Vorrichtung 1 mehrere hardwarenahe Schnittstellen 8a-8i aufweist, die auf verschiedene Weise mit den Daten generierenden Einheiten 2a-2f verbunden sind. Die Daten generierenden Einheiten 2a-2f können in mehreren Gruppen angeordnet sein, wobei in der dargestellten Anordnung die Einheiten 2c-2f eine Gruppe bilden die an einen gemeinsamen Feldbus angeschlossen ist, über den die Einheiten kommunizieren, wobei irgendein im Fachbereich bekanntes Kommunikationsprotokoll für Feldbussysteme verwendet werden kann, zum Beispiel CANopen oder Profibus-DP. Die Vorrichtung 1 ist über die Schnittstelle 8i ebenfalls mit dem Feldbus verbunden um mit den Einheiten 2c-2f der Gruppe kommunizieren zu können. Eine weitere Gruppe bilden die Einheiten 2a und 2b, die jeweils über ein End-to-End Protokoll an eine Schnittstelle 8b, 8d der Vorrichtung 1 angeschlossen sind.

Es ist anzumerken, dass die Einheiten im Allgemeinen keine Mittel aufweisen, um über Web-fähige Protokolle Daten über das Internet zu übermitteln. Es kann jedoch auch sein, dass trotz der prinzipiellen Befähigung einer Einheit zur Web-fähigen Kommunikation eine Anbindung dieser Einheit an ein offenes Netzwerk nicht zulässig ist, da sich in dem Netzwerk andere Einheiten befinden, die dadurch einem unerlaubten Zugriff ausgesetzt werden könnten.

Dem Hardwareanbieter der Vorrichtung 1, bzw. der Hardwareanbieter von sicherheitsrelevanten Elementen der Vorrichtung 1, insbesondere des in der Vorrichtung enthaltenen Sicherheitscontrollers 9, ist ein weiterer Bereich 3a zugeordnet. Unter dem Begriff "Hardwareanbieter" kann im Sinne der gegenständlichen Beschreibung insbesondere der eigentliche Chiphersteller oder aber auch ein Drittanbieter, zum Beispiel eine Zertifizierungsstelle, angesehen werden. Der Begriff "Hardwareanbieter" bezeichnet insbesondere die Stelle, die für die Funktionsweise und die Weiterentwicklung des Sicherheitskontrollers verantwortlich ist. Ein besonderes Sicherheitsmerkmal der Vorrichtung kann vorsehen, dass ein Update des dem Sicherheitskontroller zugrunde liegenden Programmcodes nur durch die als Hardwareanbieter bezeichnete Stelle und gegebenenfalls unter weiteren speziellen Sicherheitsvorkehrungen vorgenommen werden kann.

Die Vorrichtung 1 der Fig. 1 weist mehrere Web-fähige Schnittstellen 6a-6d auf, über die eine systemübergreifende Kommunikation mit anderen Einheiten über offene oder proprietäre Netze, wie etwa ein Intranet, ein GSM-Netzwerk und/oder das Internet, hergestellt werden kann. Der Aufbau webfähiger Verbindungen, die Kommunikation über diese Verbindungen und die dazu verwendeten Protokolle sind im Fachbereich hinlänglich bekannt und müssen daher hierin nicht näher erläutert werden. In dem in Fig. 1 dargestellten Ausführungsbeispiel kommuniziert die Vorrichtung 1 mit einer ferne Kommunikationseinheit 5c des Inhabers 3c des Industriestandorts 4 über eine Intranetverbindung, und mit den fernen Kommunikationseinheiten 5a und 5b des Serviceanbieters 3a bzw. des Hardwareanbieters 3a über eine Internetverbindung.

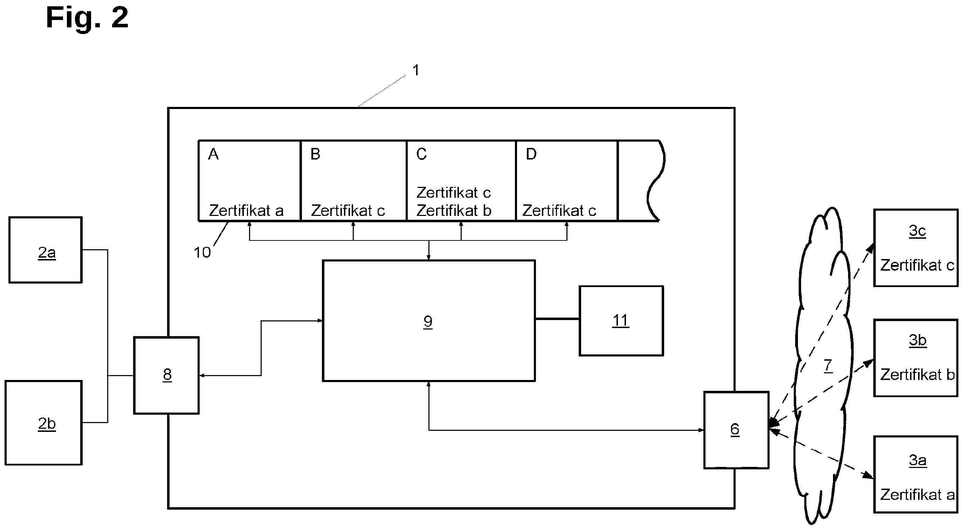

Unter Bezugnahme auf Fig. 2 wird nunmehr die Funktionsweise der erfindungsgemäßen Vorrichtung 1 erläutert, wobei insbesondere auf die Funktion des Sicherheitscontrollers 9 eingegangen wird. Der Sicherheitscontroller 9 der Vorrichtung 1 kann als einzelner Chip oder als Kombination mehrere Chips ausgeführt sein, wobei der Sicherheitskontroller mit einem Mikrokontroller 11 (ARM-CPU) zusammenarbeitet. Es ist auch möglich, den Sicherheitskontroller 10 und den Mikrokontroller 11 in einem einzigen Chip zu integrieren. Dies würde zwar hohe Sicherheitsstandards ermöglichen, wäre jedoch auch mit einem hohen Entwicklungsaufwand verbunden.

Der Sicherheitskontroller regelt die Kommunikation mit den Daten generierenden Einheiten 2a-2f über die hardwarenahen Schnittstellen 8a-8i, die Kommunikation über die Web-fähigen Schnittstellen 6a-6d, und den Zugriff auf einen sicheren Speicher 10.

Der sichere Speicher 10 ist hardwaretechnisch so abgegrenzt, dass ein Zugriff ausschließlich durch den Sicherheitscontroller 9 erfolgen kann. Um die Vorrichtung verwenden zu können, muss er zuerst von einer ausgebenden Einheit "kommissioniert" werden, wobei die Kommissionierung im dargestellten Fall vom Hardwareanbieter durchgeführt wird. Bei der Kommissionierung wird eine Aufteilung des Speichers 10 in einzelne Speicherbereiche A, B, C, D, etc. definiert, wobei in den ersten Speicherbereich A der Programmcode für die Steuerung des Sicherheitsprozessors 9 abgelegt wird. In Speicherbereich B werden für alle Instanzen, die für einen Zugriff berücksichtigt werden sollen, Zertifikate a, b, c, d abgelegt, wobei es sich um den öffentlichen Teil des Zertifikats handelt. Neben der Definition der Speicherbereiche A, B, C, D legt der Programmcode auch fest, welche Zertifikatsinhaber auf welche Speicherbereiche Zugriff haben sollen und ob die Zugriffsberechtigung auch das Ändern von Daten erlaubt.

Im dargestellten Beispiel ist der Speicherbereich A, in dem der Programmcode abgelegt ist, durch das Zertifikat a des Hardwareanbieters bzw. der Kommissionierungsstelle gesichert. Dies bedeutet, dass der Programmcode (und damit die Einteilung der Speicherbereiche und die Zugriffsberechtigungsstruktur) nur vom Hardwareanbieter 3a geändert werden kann. Änderungen am Programmcode können also weder vom Inhaber 3c der Vorrichtung, noch vom Serviceanbieter 3b vorgenommen werden, sondern nur vom Hardwareanbieter 3a, etwa wenn ein Update eingespielt werden soll. Wenn der Programmcode ein Update erfordert, kann eine weitere Sicherheitsfunktion zusätzlich eine Zustimmung des Inhabers 3a und/oder des Serviceanbieters 3b erfordern.

In der beschriebenen Ausführungsform wird also jede erfindungsgemäße Vorrichtung bei der Kommissionierung spezifisch auf die jeweiligen Einsatzbedingungen abgestimmt, sodass nachträgliche Änderungen nicht oder nur eingeschränkt möglich sind. Je nach Sicherheitsbedingungen könnten nachträgliche Änderungen jedoch für einzelne Elemente erlaubt werden, wobei solche Möglichkeiten im Programmcode definiert sein müssen. So kann beispielsweise ein Austausch einzelner Zertifikate erlaubt werden, sobald diese abgelaufen sind und erneuert werden müssen.

Die weiteren Speicherbereiche C, D,... sind jeweils einer Daten generierenden Einheit 2a-2f oder einer Gruppe solcher Einheiten zugeordnet, wobei die in dem jeweiligen Speicherbereich abgelegten Daten ebenfalls über den Programmcode gesteuert werden. Die Aktualisierung von Daten kann entweder durch ein bestimmtes Ereignis ausgelöst werden (z.B. wenn der Serviceanbieter 3b nach einer Wartung einen Servicezähler zurücksetzt), oder sie können laufend oder in bestimmten Zeitintervallen erzeugt werden (z.B. für die Aufzeichnung von Betriebszeiten). In den jeweiligen Speicherbereichen C, D für die Einheiten 2a-2f können weiters eine einzigartige Kennung (Unique ID) der Einheit und Informationen über das zu verwendende Kommunikationsprotokoll enthalten sein.

Auch die Kommunikation über die Web-fähigen Schnittstellen 6a-6d wird vom Sicherheitskontroller 9 gesteuert, wobei bei jedem Aufbau einer Kommunikationsverbindung das jeweilige Zertifikat geprüft wird und die Kommunikationsverbindung vorzugsweise über das Zertifikat auch verschlüsselt wird, sodass nur der Inhaber des Privaten Schlüssels auf die Inhalte zugreifen kann. Somit ist genau definiert ist, auf welche Speicherbereiche der Inhaber eines Zertifikats zugreifen darf. Gegebenenfalls können die Daten in bestimmten Speicherbereichen zusätzlich mit einem Zertifikat verschlüsselt abgelegt sein. Dadurch kann jedoch nur mit einem einzigen Zertifikat auf den Inhalt zugegriffen werden. In anderen Fällen ist es bevorzugt, dass die Daten auf einer anderen Weise, etwa mit einem symmetrischen Schlüssel, verschlüsselt oder unverschlüsselt im Speicher abgelegt sind, und erst bei der Datenübermittlung vom Sicherheitscontroller mit dem jeweiligen Zertifikat verschlüsselt wird.

In der in Fig. 2 dargestellten Ausführungsform kann der Inhaber 3c mit dem Zertifikat 3c auf die Speicherbereiche B, C und D zugreifen, der Serviceanbieter 3b kann mit seinem Zertifikat auf Speicherbereich C zugreifen, und der Hardwareanbieter 3a kann mit seinem Zertifikat a ausschließlich auf den Speicherbereich A zugreifen.

Der Sicherheitskontroller 9 sorgt für eine strikte Trennung der Kommunikation über die hardwarenahen Schnittstellen 8 von der Kommunikation über die Web-fähigen Schnittstellen 6, sodass ein direkter Zugriff auf die Daten generierenden Einheiten 2a-2f über eine der Web-fähigen Schnittstellen (6a-6d) unmöglich ist. Auch wenn es Angreifern gelingt, aller Sicherheitsvorkehrungen zu umgehen und den Sicherheitscontroller zu hacken, ist es ihnen damit noch nicht möglich, auch einen Zugriff auf die Daten generierenden Einheiten zu erhalten, da diese auf ganz anderen Protokollebenen kommunizieren, als dies bei den Kommunikationsprotokollen der Web-fähigen Schnittstelle der Fall ist.

Die Sicherheitsaspekte der Vorrichtungen und Verfahren der gegenständlichen Erfindung lassen sich beliebig an die jeweiligen Benutzerbedürfnisse anpassen, wobei sowohl zusätzliche Sicherheitsmaßnahmen implementiert werden können, als auch auf bestimmte Sicherheitsmerkmale verzichtet werden kann.

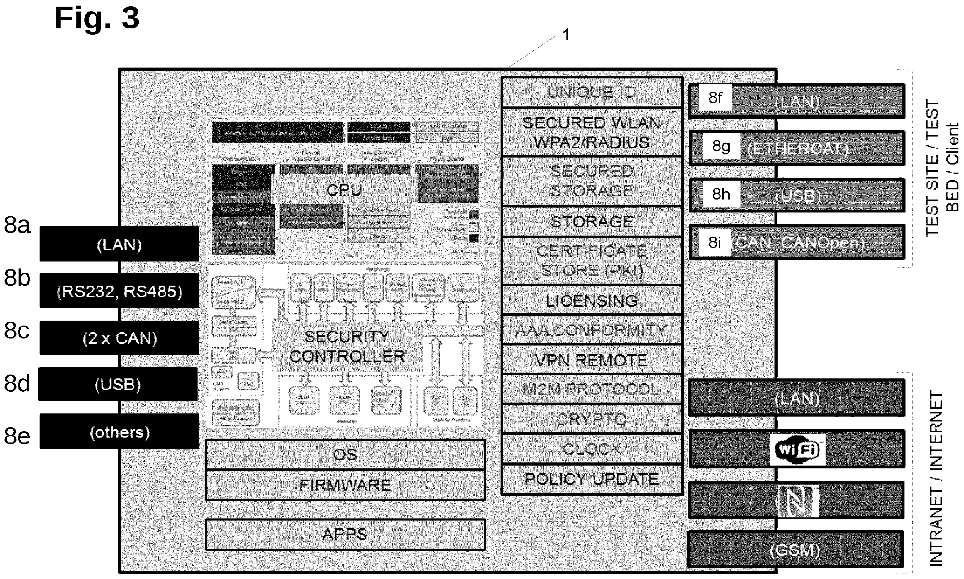

Fig. 3 zeigt eine weitere schematische Darstellung einer beispielhaften Ausführungsform der erfindungsgemäßen Vorrichtung, wobei die einzelnen Elemente hinsichtlich der funktionellen Komponenten und der verwendeten Protokolle beispielhaft uns schematisch aufgegliedert sind. Die Vorrichtung der Fig. 3 weist fünf hardwarenahe Schnittstellen für einen direkten Anschluss von Einheiten auf, dies sind die Schnittstellen 8a (LAN), 8b (RS232 oder RS485), 8c (CAN), 8d (USB) und 8e (andere). Die weiteren hardwarenahen Schnittstellen sind die Schnittstellen 8f (LAN), 8g (Ethercat), 8h (USB) und 8i (CAN, CANOpen).

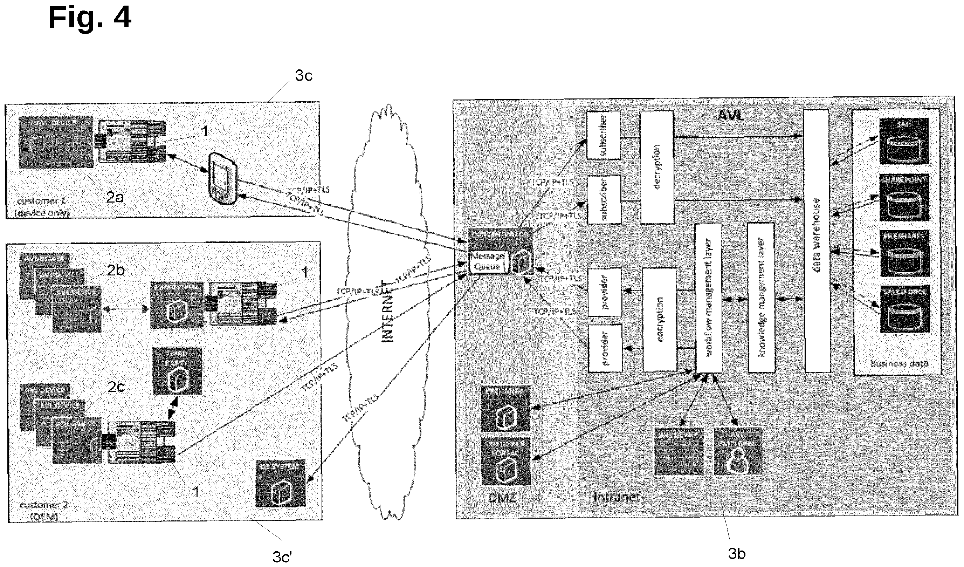

Fig. 4 zeigt schematisch ein Netzwerk mit einer serviceorientierten Architektur eines Serviceanbieters 3b, wobei die erfindungsgemäße Vorrichtung 1 bei mehreren Kunden (Inhaber 3c und 3c') des Serviceanbieters verwendet wird, um einen vom jeweiligen Inhaber definierbaren Zugriff auf Daten der vom Serviceanbieter 3b servicierten Daten generierenden Einheiten 2a-2c der Kunden zu ermöglichen.

### Bezugszeichenliste:

Vorrichtung (1)
Daten generierende Einheit (2a-2f)
Zertifikatsbegünstigter (3)
Hardwareanbieter (3a)
Serviceanbieter (3b)
Inhaber (3c)
Industriestandort 4
ferne Kommunikationseinheit (5a-5c)
Web-fähige Schnittstelle (6a-6d)
nicht proprietäres Netzwerk (7)
hardwarenahe Schnittstelle (8a-8i)
Sicherheitscontroller (9)
Sicherer Speicher (10)
Mikrokontroller 11
Speicherbereiche (A, B, C, D)
Zertifikate a, b, c

## Patentansprüche

1. Vorrichtung (1) zur Übermittlung von Daten zwischen zumindest einer Daten generierenden Einheit (2a-2f) und einer fernen Kommunikationseinheit (5a-5c), wobei die Vorrichtung (1) zumindest eine Schnittstelle (6a-6d) für ein webfähiges Kommunikationsprotokoll zur gesicherten Kommunikation mit der fernen Kommunikationseinheit (5a-5c) über ein nicht proprietäres und vorzugsweise öffentlich zugängliches Netzwerk (7) und zumindest eine Schnittstelle (8a-8i) für ein hardwarenahes Kommunikationsprotokoll zur Kommunikation mit der Daten generierenden Einheit (2a-2f) aufweist, **dadurch gekennzeichnet, dass** die zumindest eine Daten generierende Einheit (2a-2f) eine Komponente einer industriellen Anlage ist, die zur Übermittlung von Daten nur über das hardwarenahe Kommunikationsprotokoll kommuniziert, wobei die Vorrichtung weiters einen Sicherheitskontroller (9) aufweist, der die Kommunikation über die Web-fähige(n) Schnittstelle(n) (6a-6d) und über die hardwarenahe(n) Schnittstelle(n) (8a-8i) steuert, wobei dem Sicherheitscontroller (9) ein sicherer Speicher (10) zugeordnet ist, der definierte Speicherbereiche (A, B, C, D) aufweist, wobei zumindest einem Speicherbereich (A, B, C, D) zumindest ein Zertifikat (a, b, c) zugeordnet ist **und dass** zumindest einer der Speicherbereiche (A) Programmcode enthält, der auf dem Sicherheitskontroller (9) lauffähig ist, wobei dem Speicherbereich (A), der den Programmcode enthält, ein Zertifikat (a) zugeordnet ist.

2. Vorrichtung nach Anspruch 1, **dadurch gekennzeichnet, dass** der Speicherbereich (A), der den Programmcode enthält, dem Zertifikat (a) eines Hardwareanbieters (3a) des Sicherheitscontrollers zugeordnet ist.

3. Vorrichtung nach einem der Ansprüche 1 bis 2, **dadurch gekennzeichnet, dass** zumindest ein Speicherbereich (C, D) einer bestimmten Daten generierenden Einheit (2a, 3b) zugeordnet ist, wobei der Speicherbereich eine eindeutige Identifikation (Unique ID), Betriebsdaten, Steuerdaten, Konfigurationsdaten und/oder historische Daten der Einheit enthält.

4. Vorrichtung nach einem der Ansprüche 1 bis 3, **dadurch gekennzeichnet, dass** zumindest ein Speicherbereich (B) Zertifikate (a,b,c) und/oder Zuordnungen enthält.

5. Vorrichtung nach Anspruch 4, **dadurch gekennzeichnet, dass** der Speicherbereich (B), der die Zertifikate und/oder die Zuordnungen enthält, dem Zertifikat (c) eines Inhabers (3c) der Vorrichtung (1) zugeordnet ist.

6. Vorrichtung nach einem der Ansprüche 1 bis 5, **dadurch gekennzeichnet, dass** der Sicherheitscontroller (9) Mittel zur Überwachung der an die hardwarenahen Schnittstellen (8a-8i) angeschlossenen Daten generierenden Einheiten (2a-2f) aufweist.

7. Vorrichtung nach einem der Ansprüche 1 bis 6, **dadurch gekennzeichnet, dass** der Sicherheitscontroller (9) in einem Hardwarechip integriert ist.

8. Vorrichtung nach Anspruch 7, **dadurch gekennzeichnet, dass** der Hardwarechip einen sicheren Speicher und eine integrierte CPU umfasst.

9. Vorrichtung nach Anspruch 7 oder 8, **dadurch gekennzeichnet, dass** der Hardwarechip ein Kryptomodul enthält.

10. Vorrichtung nach einem der Ansprüche 1 bis 9, **dadurch gekennzeichnet, dass** an der Web-fähigen Schnittstelle ein Protokoll implementiert ist, welches rein über Push-Mechanismen funktioniert.

11. Verfahren zur Übermittlung von Daten zwischen einer Vorrichtung gemäß einem der Ansprüche 1 bis 9 und einer fernen Kommunikationseinheit (5a-5c), **dadurch gekennzeichnet, dass** das Verfahren die folgenden Schritte aufweist:
- Herstellen einer Kommunikationsverbindung über eine Web-fähige Schnittstelle (6) mit einer Kommunikationseinheit (5a-5c) eines Zertifikatsbegünstigten (3), dem ein Zertifikat (a, b, c) zugeordnet ist;
- Ermitteln des Zertifikats (a, c, b) des Zertifikatsbegünstigten (3);
- Ermitteln eines Speicherbereichs (A, B, C, D) der zu übermittelnden Daten;
- Prüfen der Zuordnung des Zertifikats (a, b, c) des Zertifikatsbegünstigten (3) zum Speicherbereich (A, B, C, D), und
- bei positiver Prüfung Übermitteln von in dem Speicherbereich (A, B, C, D) gespeicherten Daten an die ferne Kommunikationseinheit (5a-5c) und/oder Empfangen von Daten von der fernen Kommunikationseinheit (5a-5c) und Speichern der empfangenen Daten in dem Speicherbereich.

12. Verfahren nach Anspruch 11, **dadurch gekennzeichnet, dass** das Verfahren weiters die folgenden Schritte aufweist:
- Empfangen bzw. Abrufen von (Betriebs-) Daten einer Einheit (2a-2f) über eine hardwarenahe Schnittstelle (8); und
- Speichern der Betriebsdaten in einem der Einheit (2a-2f) zugeordneten Speicherbereich (B, C,...) des gesicherten Speichers (10).

13. Verfahren nach Anspruch 11 oder 12, **dadurch gekennzeichnet, dass** die Kommunikation mit der fernen Kommunikationseinheit (5a-5c) verschlüsselt erfolgt.

14. Verfahren nach einem der Ansprüche 11 bis 13, **dadurch gekennzeichnet, dass** an der Web-fähigen Schnittstelle ein Protokoll implementiert wird, welches rein über Push-Mechanismen funktioniert.

## Claims

1. A device (1) for transmitting data between at least one data-generating unit (2a-2f) and a remote communication unit (5a-5c), whereby the device (1) has at least one interface (6a-6d) for an internet-based communication protocol to communicate securely with the remote communication unit (5a-5c) via a non-proprietary, preferably publicly accessible network (7), and at least one interface (8a-8i) for a communication protocol that is close to the hardware to communicate with the data-generating unit (2a-2f), **characterized in that** the at least one data-generating unit (2a-2f) is a component of an industrial system, the component only communicates via the communication protocol that is close to the hardware to transmit data, whereby the device has a security controller (9) which controls the communications via the internet-based interface(s) (6a-6d) and via the interfaces (8a-8i) that are close to the hardware, whereby a secure memory (10) with defined memory areas (A, B, C, D) is allocated to the security controller (9), whereby at least one certificate (a, b, c) is assigned to at least one memory area (A, B, C, D), and at least one specific memory area (A) contains program code which can be executed by the security controller (9), wherein the memory area (A), which contains the program code, is assigned a certificate (a).

2. A device according to claim 1, **characterized in that** the specific memory area (A) which contains the program code is assigned to the certificate (a) of a hardware supplier (3a) of the security controller.

3. A device according to one of the claims 1 to 2, **characterized in that** at least one one further memory area (C, D) is allocated to a specific data-generating unit (2a, 3b), whereby the further memory area contains a unique identification, unique ID, operational data, control data, configuration data and/or historical data from the unit.

4. A device according to one of the claims 1 to 3, **characterized in that** at least one other memory area (B) contains certificates (a, b, c) and/or allocations.

5. A device according to claim 4, **characterized in that** the other memory area (B) which contains the certificates and/or the allocations is assigned to the certificate (c) of an owner (3c) of the device (1).

6. A device according to one of the claims 1 to 5, **characterized in that** the security controller (9) has a means to monitor the data-generating units (2a-2f) which are connected to the interfaces (8a-8i) that are close to the hardware.

7. A device according to one of the claims 1 to 6, **characterized in that** the security controller (9) is integrated in a hardware chip.

8. A device according to claim 7, **characterized in that** the hardware chip comprises a secure memory and an integrated CPU.

9. A device according to claim 7 or 8, **characterized in that** the hardware chip contains a crypto module.

10. A device according to one of the claims 1 to 9, **characterized in that** a protocol is implemented in the internet-based interface which functions only via push mechanisms.

11. A procedure for transmitting data between a device according to one of the claims 1 to 9 and a remote communication unit (5a-5c), wherein the procedure has the following steps:
- Establishing a communications link via an internet-based interface (6) with the communications unit (5a-5c) of a certified person (3) who has a certificate (a, b, c) assigned to them;
- Identifying the certificate (a, b, c) of the certified person (3);
- Identifying a memory area (A, B, C, D) for the data to be transmitted;
- Checking the allocation of the certificate (a, b, c) belonging to the certified person (3) to the memory area (A, B, C, D), and
- If the check gives a positive result, transmitting the data saved in the memory area (A, B, C, D) to the remote communication unit (5a-5c) and/or receiving data from the remote communication unit (5a-5c) and saving the received data in the memory area.

12. A procedure according to claim 11, **characterized in that** the procedure also has the following steps:
- Receiving or requesting (operational) data from a unit (2a-2f) via an interface (8) that is close to the hardware; and
- Saving the operational data in a secure memory (10) area (B, C, ...) allocated to the unit (2a-2f).

13. A procedure according to claim 11 or 12, **characterized in that** the communication with the remote communication unit (5a-5c) takes place in an encrypted form.

14. A procedure according to one of the claims 11 to 13, **characterized in that** a protocol is implemented in the internet-based interface which functions only via push mechanisms.

## Revendications

1. Dispositif (1) de transmission de données entre au moins une unité de génération de données (2a-2f) et une unité de communication distante (5a-5c), le dispositif (1) comportant au moins une interface (6a-6d) destinée à un protocole de communication Internet pour la communication sécurisée avec l'unité de communication distante (5a-5c) par le biais d'un réseau (7) non propriétaire et de préférence accessible au public et au moins une interface (8a-8i) destinée à un protocole de communication quasi-matériel pour la communication avec l'unité de génération de données (2a-2f), **caractérisé en ce que** l'au moins une unité de génération de données (2a-2f) étant un composant d'une installation industrielle, le composant de communication de données ne communique que par le protocole de communication quasi-matériel, le dispositif comportant un contrôleur de sécurité (9) qui commande la communication par le biais de l'interface ou des interfaces Internet (6a-6d) et de l'interface ou des interfaces quasi-matérielles (8a-8i), le contrôleur de sécurité (9) étant associé à une mémoire sécurisée (10) qui comporte des zones de mémoire définies (A, B, C, D), au moins une zone de mémoire (A, B, C, D) étant associée à au moins un certificat (a, b, c), et qu'au moins une zone de mémoire spécifique (A) contient un code de programme qui est exécutable sur le contrôleur de sécurité (9), un certificat (a) étant attribué à la zone de mémoire (A) qui contient le code de programme.

2. Dispositif selon la revendication 1, **caractérisé en ce que** la zone de mémoire spécifique (A), qui contient le code de programme, est associée au certificat (a) d'un fournisseur matériel (3a) du contrôleur de sécurité.

3. Dispositif selon l'une des revendications 1 à 2, **caractérisé en ce qu'au** moins une autre zone de mémoire (C, D) est associée à une unité de génération de données (2a, 3b) déterminée, l'autre zone de mémoire contenant une identification univoque, un identifiant unique, des données de fonctionnement, des données de commande, des données de configuration et/ou des données historiques de l'unité.

4. Dispositif selon l'une des revendications 1 à 3, **caractérisé en ce qu'au** moins une autre zone de mémoire (B) contient des certificats (a, b, c) et/ou des associations.

5. Dispositif selon la revendication 4, **caractérisé en ce que** l'autre zone de mémoire (B), qui contient les certificats et/ou les associations, est associée au certificat (c) d'un titulaire (3c) du dispositif (1).

6. Dispositif selon l'une des revendications 1 à 5, **caractérisé en ce que** le contrôleur de sécurité (9) comprend des moyens de surveillance des unités de génération de données (2a-2f) connectées aux interfaces quasi-matérielles (8a-8i).

7. Dispositif selon l'une des revendications 1 à 6, **caractérisé en ce que** le contrôleur de sécurité (9) est intégré dans une puce matérielle.

8. Dispositif selon la revendication 7, **caractérisé en ce que** la puce matérielle comprend une mémoire sécurisée et une CPU intégrée.

9. Dispositif selon la revendication 7 ou 8, **caractérisé en ce que** la puce matérielle contient un module cryptographique.

10. Dispositif selon l'une des revendications 1 à 9, **caractérisé en ce qu'**un protocole, qui ne fonctionne que par le biais de mécanismes Push, est mis en oeuvre au niveau de l'interface Internet.

11. Procédé de transmission de données entre un dispositif selon l'une des revendications 1 à 9 et une unité de communication distante (5a-5c), le procédé comprenant les étapes suivantes :
- d'établissement d'une connexion de communication, par le biais d'une interface Internet (6), avec une unité de communication (5a-5c) d'un bénéficiaire de certificat (3) auquel un certificat (a, b, c) est associé ;
- de détermination du certificat (a, c, b) du bénéficiaire de certificat (3) ;
- de détermination d'une zone de mémoire (A, B, C, D) des données à transmettre ;
- de contrôle de l'association du certificat (a, b, c) du bénéficiaire de certificat (3) à la zone de mémoire (A, B, C, D), et
- dans le cas d'un contrôle positif, de transmission de données mémorisées dans la zone de mémoire (A, B, C, D) à l'unité de communication distante (5a-5c) et/ou de réception de données en provenance de l'unité de communication distante (5a-5c) et de mémorisation des données reçues dans la zone de mémoire.

12. Procédé selon la revendication 11, **caractérisé en ce que** le procédé comprend en outre les étapes suivantes :
- la réception ou la récupération de données (de fonctionnement) d'une unité (2a-2f) par le biais d'une interface quasi-matérielle (8) ; et
- la mémorisation des données de fonctionnement dans une zone de mémoire (B, C, ...), associée à l'unité (2a-2f), de la mémoire sécurisée.

13. Procédé selon la revendication 11 ou 12, **caractérisé en ce que** la communication avec l'unité de communication distante (5a-5c) est cryptée.

14. Procédé selon l'une des revendications 11 à 13, **caractérisé en ce qu'**un protocole, qui ne fonctionne que par le biais de mécanismes Push, est mis en oeuvre au niveau de l'interface Internet.
